(19) Europäisches Patentamt
European Patent Office
Office européen des brevets

(11) Numéro de publication: **0 086 134**
**B1**

(12) # FASCICULE DE BREVET EUROPÉEN

(45) Date de publication du fascicule du brevet: **05.11.86**

(51) Int. Cl.⁴: **B 60 T 8/18**, B 60 T 8/26

(21) Numéro de dépôt: **83400167.9**

(22) Date de dépôt: **25.01.83**

(54) **Régulateur de freinage jumelé.**

(30) Priorité: **09.02.82 FR 8202056**

(43) Date de publication de la demande: **17.08.83 Bulletin 83/33**

(45) Mention de la délivrance du brevet: **05.11.86 Bulletin 86/45**

(84) Etats contractants désignés: **DE FR GB IT SE**

(56) Documents cité:
**DE-A-3 010 513**
**FR-A-2 477 999**
**GB-A-1 600 459**

(73) Titulaire: **SOCIETE DE L'USINE DE LA MARQUE, 52, avenue des Champs Elysées, F-75008 Paris (FR)**

(72) Inventeur: **Schladerer, Max, THOMSON- CSF SCPI 173, bld Haussmann, F-75379 Paris Cedex 08 (FR)**

(74) Mandataire: **Trocellier, Roger, THOMSON- CSF SCPI 19, avenue de Messine, F-75008 Paris (FR)**

**EP 0 086 134 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

## Description

L'invention se rapporte aux systèmes hydrauliques de freinage des véhicules, notamment, des véhicules automobiles; elle concerne un régulateur de freinage comportant deux circuits de freinage séparés l'un de l'autre.

Afin d'accroître la sécurité de freinage des véhicules, il est connu d'équiper ceux-ci d'un système de freinage comportant deux circuits séparés, de sorte, qu'en cas de défaillance de l'un de ces deux circuits, le circuit valide puisse continuer à assurer un freinage satisfaisant du véhicule. Dans les systèmes de freinage pour véhicules, la fonction du régulateur de freinage est de réduire les risques de blocage des roues arrière, dans le but d'augmenter l'efficacité du freinage tout en évitant la tendance au dérapage du véhicule au moment du freinage de celui-ci. Pour ce faire, le régulateur de freinage au-delà d'une pression de consigne limite la grandeur de la pression du fluide appliquée aux moteurs de freins des roues arrière, de façon que cette pression croisse plus lentement que la pression d'alimentation fournie par le maître-cylindre couplé à une pédale actionnée par le conducteur du véhicule, tandis que cette pression d'alimentation est appliquée directement aux moteurs des freins des roues avant. Le régulateur de freinage est intercalé entre les sorties du maître-cylindre et les entrées des moteurs de freins des roues arrières. La pression de consigne du régulateur de freinage, qui correspond au seuil de limitation de celui-ci est soit réglée à une valeur fixe, et dans ce cas le régulateur opère en limiteur ou compensateur de freinage, soit fonction de la charge des roues arrière et, dans ce cas, opère en limiteur-compensateur de freinage asservi.

Dans le cas où la pression du fluide fourni aux moteurs de freins des roues arrière varie dans un rapport déterminé en fonction de la pression d'alimentation, au-delà du seuil de limitation, le régulateur opère en compensateur de freinage.

Dans un système hydraulique de freinage comportant deux circuits séparés, le régulateur de freinage résulte de la combinaison de deux organes limiteurs de pression agencés dans un corps unique. Selon le mode de couplage de ces deux limiteurs de pression, on considère deux types de régulateur: le type tandem dans lequel les deux limiteurs de pression sont couplés mécaniquement en série et le type jumelé dans lequel les limiteurs de pression sont couplés mécaniquement en parallèle. Le régulateur de freinage considéré, ici, est du type jumelé; il peut être utilisé en limiteur-compensateur de freinage uniquement ou en limiteur-compensateur de freinage asservi selon que la pression de consigne est réglée à une valeur fixe ou est asservie à la charge des roues dont on veut contrôler le freinage.

Un tel système est décrit dans le brevet allemand DE-A-3 010 513 correspondant au préambule de la revendication 1. Ses deux cylindres limiteurs de pression agencés dans le corps massif comportent chacun un piston qui se projette à l'extérieur du corps. Chaque piston est en appui sur une plaque de couplage, qui peut être circulaire, en butée contre le corps en position "relachée". Elle est guidée en son centre par un brossage hémisphérique pivotant dans un évidement central circulaire du corps.

Un tel régulateur, en cas de défaillance de l'un des circuits valide une pression de consigne, ou de coupure, très supérieure à celle obtenue pendant le fonctionnement normal des deux circuits. Le but de l'invention est de pouvoir garder, en cas de panne de l'un des circuits, une pression de consigne sensiblement égale ou legerement supérieure à la pression de consigne correspondant au fonctionnement normal.

Pour atteindre ce but, un régulateur de freinage jumelé selon l'invention comprend deux organes limiteurs de pression disposés parallèlement dans un corps massif, chacun de ces limiteurs comportant un piston qui se projette à travers la paroi du corps massif et est couplé à un palonnier constitué par un élément rigide circulaire, et articulé en son centre par sa face antérieure sur une rotule soumise à l'action d'une force antagoniste, caractérisé en ce que cet élément rigide a un diamètre qui est supérieur à l'entraxe des pistons de manière à ce qu'il repose par sa face postérieure sur le corps massif à l'extérieur des pistons.

Les caractéristiques et les avantages que présente un régulateur de freinage selon l'invention, ressortiront plus clairement de la description détaillée qui va suivre, faite en regard des dessins annexés qui illustrent le concept de l'invention et représentent un mode d'exécution du régulateur de freinage. Sur ces dessins, des reférences alphanumériques identiques indiquent des éléments similaires:

La figure 1 représente, selon une vue en coupe, un régulateur de freinage jumelé selon l'invention.

La figure 2a représente un mode de réalisation d'un régulateur de freinage conforme à l'invention.

La figure 2b représente une vue latérale du régulateur de freinage.

La figure 2c représente les détails de réalisation de l'organe de commande du palonnier du régulateur de freinage.

La figure 3 représente un régulateur de freinage dans lequel le palonnier est soumis à l'action d'une force de réaction de grandeur fixe.

La figure 1 représente une vue en coupe d'un régulateur de freinage jumelé selon l'invention; ce dispositif de régulation comprend les éléments suivants:

- un corps massif unique 1 dans lequel sont agencés, de part et d'autre d'un plan de symétrie Xa,b, deux organes limiteurs de pression identique A et B d'axes respectifs Xa et Xb mutuellement parallèles. Chacun de ces deux organes limiteurs comprend un piston 2 qui peut coulisser librement de façon étanche dans un alésage etage 3 et se projette à travers la paroi du corps 1. A l'une de ses extrémités, ce piston coulissant est muni d'une tige de transmission 2a qui porte un clapet 2b ayant une portée conique, tandis que, a son autre extrémité, le piston comporte une tête 2c de forme semisphérique. Le clapet peut coopérer avec un siège correspondant situé sur l'ouverture centrale d'une cloison annulaire 4 qui délimite deux chambres: une

première chambre 5 dite "chambre d'entrée" et une seconde chambre 6 dite "chambre de sortie". Ces chambres d'entrée et de sortie sont respectivement couplées à des orifices d'entrée 7 et de sortie 8 du fluide traversant. La cloison annulaire 4 est solidaire d'une chemise mobile 9 montée de façon étanche dans la partie du plus grand diamètre de l'alésage étagé 3, cette chemise mobile est maintenue en butée sur l'épaulement 3a de cet alésage par un moyen élastique 9b, tel qu'un ressort hélicoïdal, par exemple. En outre, l'alésage étagé est obturé par un bouchon de fermeture hermétique 10 comportant un moyen de butée 10a du clapet 2b. Des limiteurs de pression similaires ont déjà été décrits en détail dans la demande de brevet français n° 81 23210, déposée le 11 décembre 1981, au nom de la Demanderesse,

- un palonnier constitué par un élément circulaire rigide 11 articulé sur une rotule 12 centrée en position sur le plan de symétrie Xa,b des deux organes limiteurs de pression. Cet élément circulaire de diamètre au moins égal à l'entre-axe Xa-Xb des pistons à clapets, et preférentiellement de diamètre sensiblement supérieur à cet entre-axe, repose par sa face postérieure 11a, ou tout au moins par sa partie périphérique sur le corps 1 du dispositif, tandis qu'il est articulé en son centre, par sa face antérieure 11b, sur une rotule 12 dont la tête 12a est l'objet d'une force antagoniste de réaction F de direction indiquée par la flèche 13. Cet élément circulaire 11 comporte un bossage annulaire central 11c qui fournit une cuvette d'appui pour la rotule 12 et un bourrelet périphérique 11d dont la fonction, tout en renforçant la rigidité mécanique de l'élément, permet de fixer un moyen de maintien 14 de cet élément du palonnier, ce moyen de maintien assurant conjointement une protection mécanique de la tête des pistons coulissants.

La force antagoniste de réaction F, appliquée à la tête 12a de la rotule du palonnier, est fournie par un organe mécanique (non représenté), ou autre, comprenant éventuellement des moyens élastiques précontraints. Cet organe mécanique de commande est généralement relié à un élément de l'essieu des roues arrières du véhicule, tandis que le corps 1 du regulateur comporte des moyens de fixation (non représentés) au chassis de ce vehicule. La liaison de cet organe de commande avec l'essieu des roues arrières est telle que toute variation produit une modification sensiblement proportionnelle de la force de réaction antagoniste F. Cet organe de commande qui ne fait pas partie de l'invention et a déjà été largement décrit, par ailleurs, ne sera pas repris en détail ici.

On considérera maintenant le fonctionnement du régulateur de freinage qui vient d'être décrit. Au repos, c'est-à-dire lorsque le conducteur du véhicule n'actionne pas la pédale du maître-cylindre, la pression du fluide aux entrées du régulateur est sensiblement nulle et les pistons à clapet reposent sur les surfaces d'appui fournies par les bouchons de fermeture des alésages étagés, l'élément circulaire du palonnier est au contact du corps du régulateur, la communication entre les chambres d'entrée et de sortie des organes limiteurs de pression est libre et les chemises étanches portant les parois coaxiales annulaires sont en butées sur l'épaulement correspondant des alésages étagés.

Dans le cas ou les deux circuits de freinage sont en état, lorsque le conducteur actionne la pédale du maître-cylindre, la pression du fluide croît progressivement et le fluide s'écoule dans la chambre de sortie à travers l'orifice central de la paroi annulaire, et la pression de sortie est sensiblement égale à la pression d'entrée jusqu'au moment où la pression de consigne Pc est atteinte, cette pression de consigne étant donnée par la relation suivante:

$$Pc = \frac{F}{2S}$$

où S est la section droite des pistons coulissants. Les pistons, libres de coulisser dans l'alésage, sont au contact de l'élément circulaire du palonnier sur une circonférence de rayon $R_1$ égale à la valeur des entre-axes Xab-Xa = Xab-Xb.

La course (c) du piston crée une force antagoniste complémentaire $F_1 = kc$ où k est le coefficient de raideur de l'organe mécanique de commande qui produit la force antagoniste F; il s'ensuit que la pression de coupure ou pression d'intervention Pi est donnée par la relation suivante:

$$Pi = \frac{F + kc}{2S}$$

La course (c) des pistons est donnée par la distance relative du clapet et de son siège lorsque les têtes des pistons viennent au contact de l'élément circulaire du palonnier.

Lorsque le conducteur du véhicule relâche la pédale du maître-cylindre, la pression d'entrée du fluide diminue, les pistons des deux organes limiteurs s'abaissent et l'élément circulaire du palonnier revient en appui sur le corps du régulateur.

Dans le cas d'une avarie de l'un des circuits de freinage, le piston de l'organe limiteur correspondant n'étant pas l'objet d'une force de pression produite par le fluide ne vient pas au contact de l'élément circulaire du palonnier, tandis que le piston de l'organe limiteur de pression correspondant au circuit de freinage valide opère normalement. Il s'ensuit que la course f de la rotule du palonnier est réduite et égale a:

$$f = \frac{R_2}{R_2 + R_1} \cdot C$$

où $R_2$ est le rayon de la circonférence de l'élément circulaire du palonnier. Il en résulte que la pression d'intervention $P_i$ est donnée par la relation approchée suivante

$$P_i = \frac{R_2}{R_2 + R_1} \cdot \left( F + \frac{R_2}{R_2 + R_1} ck \right) \cdot \frac{1}{S}$$

dans laquelle on néglige les faibles déplacements relatifs de l'élément circulaire du palonnier par rapport au corps du régulateur et du piston du limiteur de pression actif.

La figure 2a représente une vue en coupe d'un mode de réalisation d'un régulateur de freinage muni de son organe de commande de la pression de consigne. Sur cette figure est indiqué le corps 1 du dispositif muni de ses orifices d'entrée 7 et de sortie 8, tandis que les deux organes limiteurs agencés dans le corps 1, comme décrit précédemment, ne sont pas représentés ici. Le palonnier du régulateur comprend l'élément circulaire rigide 11 articulé sur la rotule 12. Cet élément circulaire repose par sa face postérieure 11a sur le corps du régulateur tandis que la tête 12a de la rotule est fixée rigidement sur un levier pivotant 15 qui est articulé sur un axe 16 disposé dans le corps 1, cet axe d'articulation étant parallèle au plan de symétrie Xab des deux organes limiteurs. L'élément circulaire 11 du palonnier comporte dans sa partie centrale un bossage annulaire 11c qui fournit une cuvette pour la rotule 12 et la périphérie de la face postérieure 11d de cet élément circulaire est légèrement arrondie pour fournir une surface de basculement, de rayon moyen égal à la grandeur $R_2$ déjà défini, dans le cas d'une avarie de l'un des organes limiteurs, ou du circuit de freinage dans lequel cet organe limiteur est intercalé. La tête 12a de la rotule est équipée, d'une part, d'un soufflet de protection 17 qui s'emboite par sa partie inférieure sur le corps du dispositif et est maintenu serré contre celui-ci par un anneau de serrage 18 et, d'autre part, intérieurement au soufflet, d'une "épingle" qui coopère avec le bossage central 11c pour fournir au moyen de maintien 19 de l'élément circulaire 11 sur sa rotule 12. L'extrémité du levier pivotant 15, opposée à son extrémité traversée par l'axe d'articulation 16, est équipée d'un ressort hélicoïdal 20 traversé en son centre par une tige de commande mobile 21 (partiellement représentée) munie d'un moyen de réglage 22 de la pression du ressort.

La figure 2b représente une vue latérale du régulateur de freinage qui montre notamment les moyens de fixation 23 et 24 du dispositif sur le chassis du véhicule. Ces moyens de fixation sont constitués, par exemple, par des trous taraudés usinés dans le corps 1 du dispositif. De plus, sur cette figure, on voit plus clairement la forme du levier pivotant 15.

La figure 2c représente une vue du régulateur de freinage qui montre, notamment, la position de l'axe d'articulation 16 du levier pivotant dans le corps 1 du dispositif. Sur cette figure, on voit également les orifices d'entree 7a et 7b et de sortie 8a et 8b des deux organes limiteurs.

Le fonctionnement du régulateur de freinage décrit aux figures 2a à 2c étant identique à celui décrit à la figure 1 ne sera pas repris ici.

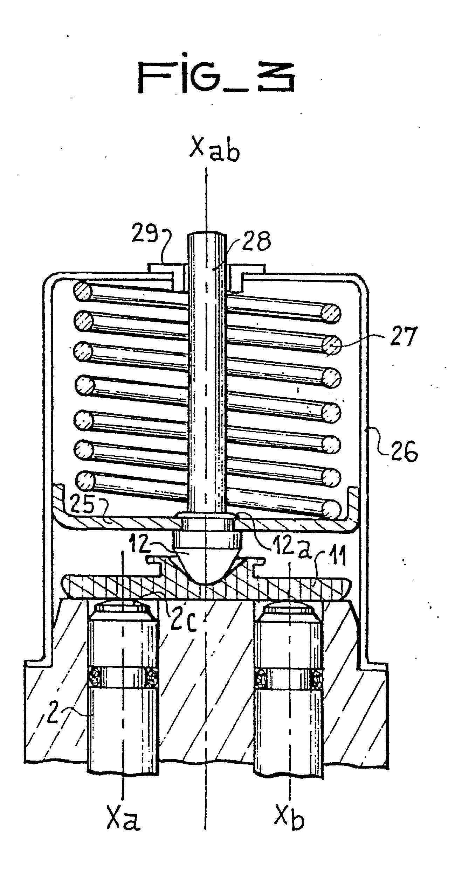

La figure 3 représente une vue partielle en coupe d'un régulateur de freinage dans lequel le palonnier est soumis à une force antagoniste F de grandeur fixe. La tête 12a de la rotule est solidaire d'un disque 25 qui peut coulisser librement à l'intérieur d'un carter cylindrique 26 rigidement fixé sur le corps 1 du dispositif. Ce disque est soumis à l'action d'un ressort hélicoïdal précontraint 27 qui prend appui sur la face interne supérieure du carter. Pour assurer un déplacement rectiligne de la rotule 12 dans le plan de symétrie Xab des deux organes limiteurs, la tête 12a de cette rotule peut être munie d'une tige de guidage 28 qui coulisse librement dans une pièce annulaire 29 solidaire de la partie supérieure du carter.

Selon une variante de réalisation, le disque d'appui 25 du ressort hélicoïdal peut comporter en son centre un filetage qui coopère avec un filetage corespondant disposé sur la tige de guidage 28 pour fournir un moyen de réglage de la pression du ressort hélicoïdal 27 et, par voie de conséquence, de la pression de consigne du régulateur de freinage.

On voit maintenant plus clairement les avantages que présente un régulateur de freinage selon l'invention: le régulateur est de forme compacte, ce qui facilite son implantation sur le véhicule; les éléments mobiles du palonnier et les têtes de pistons peuvent être protégés aisément de l'environnement; le répartiteur d'effort que constitue l'élément circulaire rigide du palonnier est de forme symétrique relativement simple ce qui facilite sa fabrication et son montage dans le régulateur de freinage.

L'invention n'est pas strictement limitée aux modes d'exécution du régulateur de freinage tels que décrits et notamment à celui des limiteurs de pression qui ont été représentés à titre uniquement explicatif du fonctionnement du palonnier.

**Revendications**

1. Régulateur de freinage jumelé comprenant deux organes limiteurs de pression (A, B) disposés parallèlement dans un corps massif (1), chacun de ces limiteurs comportant un piston (2) qui se projette à travers la paroi du corps massif et qui est couplé à un palonnier constitué par un élément rigide circulaire (11) articulé en son centre par sa face antérieure (11b) sur une rotule (12) soumise à l'action d'une force antagoniste (F), caractérisé en ce que cet élément rigide (11) a un diamètre qui est supérieur à l'entraxe (Xa-Xb) des pistons (2) de manière à ce qu'il repose par sa face postérieure (11a) sur le corps massif à l'extérieur des pistons.

2. Régulateur selon la revendication 1, caractérisé en ce que l'élément circulaire (11) du palonnier comporte un bossage central annulaire (11c) pour fournir une cuvette d'appui de la rotule (12).

3. Régulateur selon la revendication 2, caractérisé en ce que l'élément circulaire comporte un bourrelet périphérique (11d).

4. Régulateur selon la revendications 3, caractérisé en ce que le bourrelet périphérique (11d) est muni d'un soufflet (14) maintenu en appui sur le corps massif.

5. Régulateur selon la revendication 2, caractérisé en ce que la périphérie de la face postérieure de l'élément circulaire (11) est légèrement arrondie.

6. Régulateur selon la revendication 1, caractérisé en ce que la tête (12a) de la rotule est équipée d'un soufflet (17) qui est maintenu en appui sur le corps massif.

7. Régulateur selon la revendication 1, caractérisé en ce que la tête (12a) de la rotule est fixée rigidement à un levier pivotant (15) articulé sur le corps massif.

8. Régulateur selon la revendication 1, caractérisé en ce que la tête (12a) de la rotule est munie d'un disque (25) qui coulisse librement dans un carter (26) fixé rigidement sur le corps massif et en ce qu'il est soumis à l'action d'un ressort hélicoïdal (27) qui prend appui sur le fond du carter.

**Patentansprüche**

1. Zwillings-Bremsregler mit zwei Druckbegrenzungsorganen (A, B), die parallel in einem massiven Körper (1) angeordnet sind, wobei jeder dieser Begrenzer einen Kolben (2) aufweist, der durch eine Wandung des massiven Körpers hindurchragt und an ein Ausgleichsteil angekoppelt ist, welches aus einem kreisrunden starren Element (11) gebildet ist, welches in seinem Mittelpunkt auf seiner Vorderseite (11b) an einem Kippzapfen (12) angelenkt ist, der unter der Wirkung einer Gegenkraft (F) steht, dadurch gekennzeichnet, daß dieses starre Element (11) einen Durchmesser aufweist, der größer als der Achsabstand (Xa-Xb) zwischen den Kolben (2) ist, dergestalt, daß es an seiner hinteren Fläche (11a) auf der Außenseite der Kolben am massiven Körper aufliegt.

2. Regler nach Anspruch 1, dadurch gekennzeichnet, daß das kreisrunde Element (11) des Ausgleichsteils einen zentralen Ringwulst (11c) bildet, um eine Stützschale für den Kippzapfen (12) zu bilden.

3. Regler nach Anspruch 2, dadurch gekennzeichnet, daß das kreisrunde Element einen Umfangswulst (11d) aufweist.

4. Regler nach Anspruch 3, dadurch gekennzeichnet, daß der Umfangswulst (11d) mit einem Balg (14) versehen ist, der in Abstützung auf dem massiven Körper gehalten ist.

5. Regler nach Anspruch 2, dadurch gekennzeichnet, daß der Umfang der Rückseite des kreisrunden Elementes (11) leicht abgerundet ist.

6. Regler nach Anspruch 1, dadurch gekennzeichnet, daß der Kopf (12a) des Kippzapfens mit einem Balg (17) ausgestattet ist, der in Abstützung auf dem massiven Körper gehalten wird.

7. Regler nach Anspruch 1, dadurch gekennzeichnet, daß der Kopf (12a) des Kippzapfens starr an einem Schwenkhebel (15) befestigt ist, der an dem massiven Körper angelenkt ist.

8. Regler nach Anspruch 1, dadurch gekennzeichnet, daß der Kopf (12a) des Kippzapfens mit einer Scheibe (25) versehen ist, welche frei in einem Gehäuse (26) gleitet, das starr an dem massiven Körper befestigt ist, und daß er unter der Wirkung einer Schraubenfeder (27) steht, welche sich auf dem Boden des Gehäuses abstützt.

**Claims**

1. Twin brake regulator comprising two pressure limiting members (A, B) arranged in parallel within a solid body (1), each of these limiting members comprising a piston (2) projecting through the wall of the solid body and coupled to a balancing member formed of a circular rigid element (11) having the center of its front face (11b) pivotally connected to a ball journal (12) subjected to a counterforce (F), characterized in that said rigid element (11) has a diameter exceeding the spacing (Xa-Xb) between the axis of the pistons (2) so that it is supported on its rear face (11a) by the solid body on the outer side of the pistons.

2. Regulator according to claim 1, characterized in that the circular element (11) of the balancing member comprises a central annular hub (11c) to provide a bearing basin for the ball journal (12).

3. Regulator according to claim 2, characterized in that the circular element comprises a peripheral bead

(11d).

4. Regulator according to claim 3, characterized in that the peripheral bead (11d) is provided with a bellows (14) maintained to be supported by the solid body.

5. Regulator according to claim 2, characterized in that the periphery of the rear face of the circular element (11) is slightly rounded.

6. Regulator according to claim 1, characterized in that the head (12a) of the ball journal is equipped with a bellows (17) maintained to be supported by the solid body.

7. Regulator according to claim 1, characterized in that the head (12a) of the ball journal is rigidly affixed to a pivoting lever (15) pivotally connected to the solid body.

8. Regulator according to claim 1, characterized in that the head (12a) of the ball journal is equipped with a disc (25) which is free to slide in a housing (26) rigidly fixed to the solid body, and in that it is subjected to the action of a helicoidal spring (27) bearing on the bottom of the housing.

FIG_1

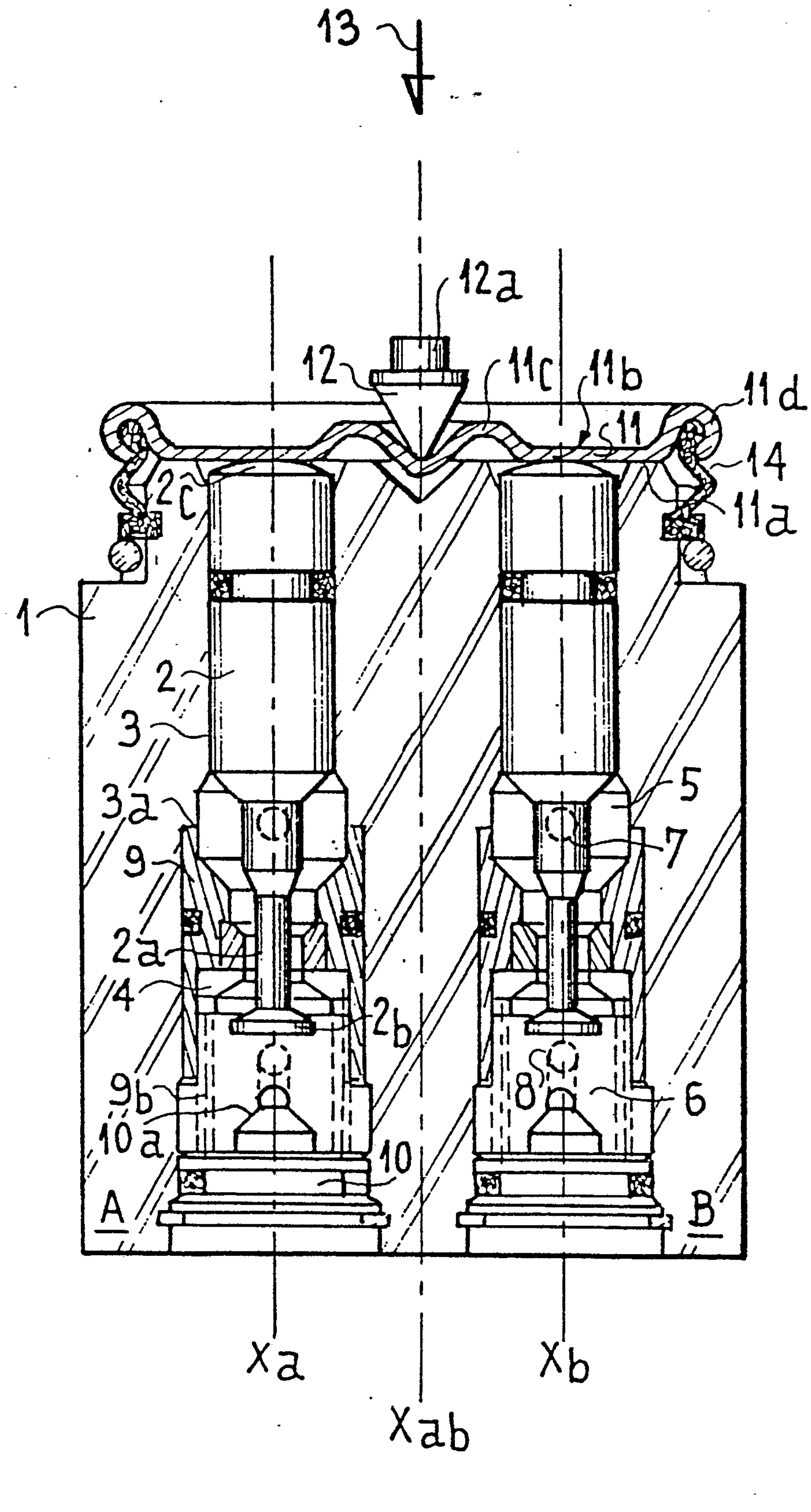
13
12a
12
11c
11b
11d
11
14
11a
2c
1
2
3
5
3a
7
9
2a
4
2b
8
9b
6
10a
10
A
B
Xa
Xb
Xab

FIG_2-a

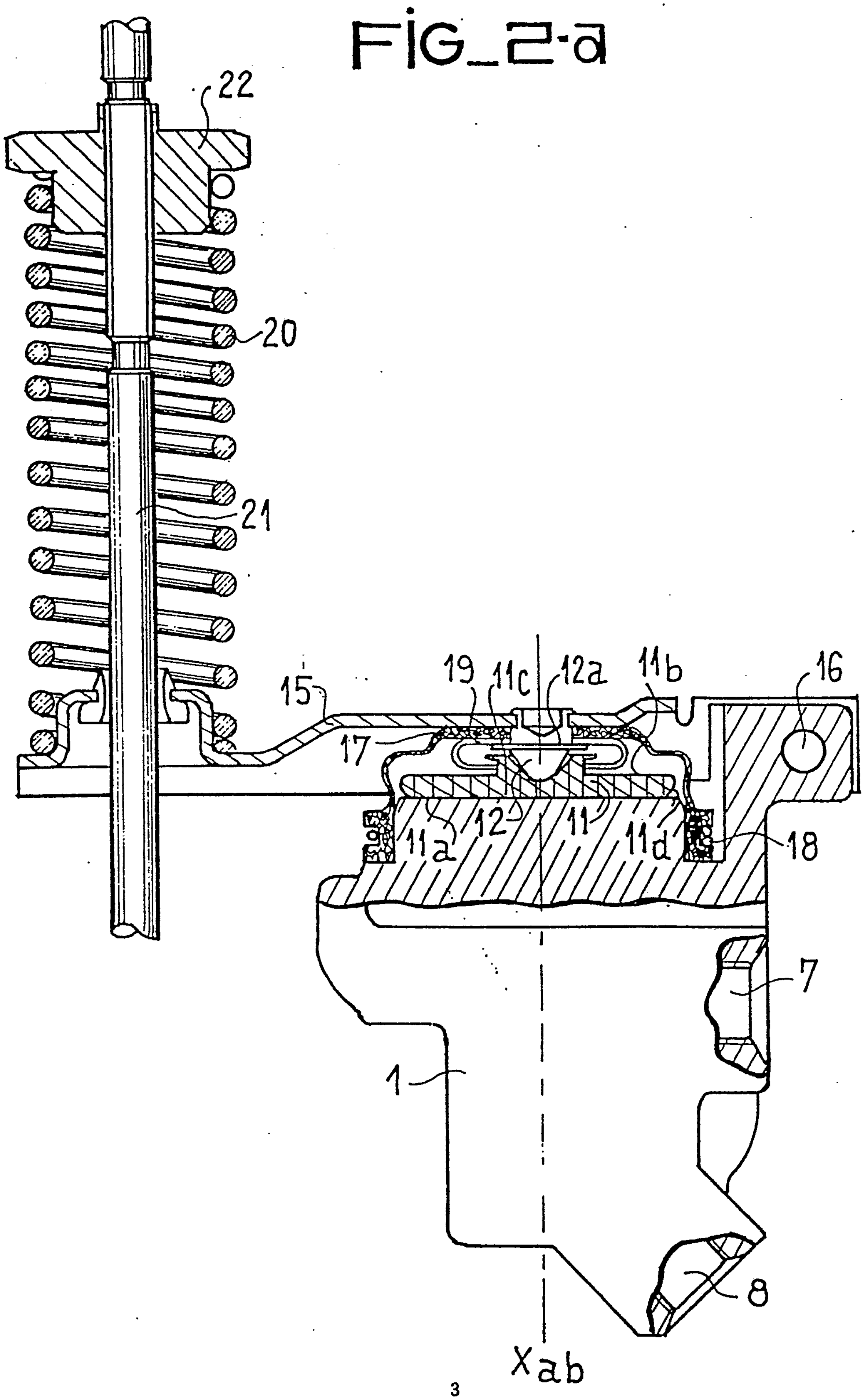

FIG_2-b

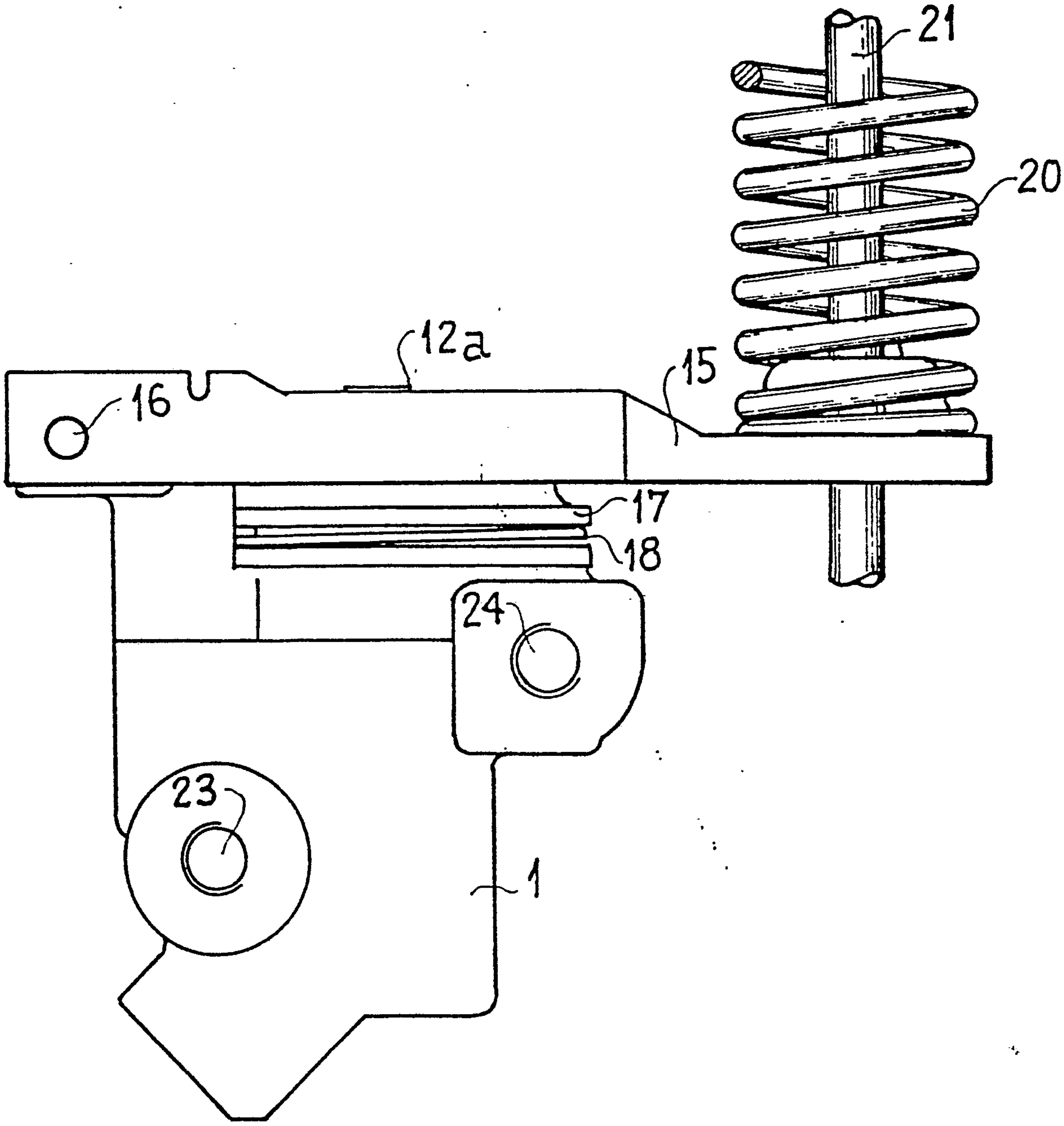

FIG_2-C

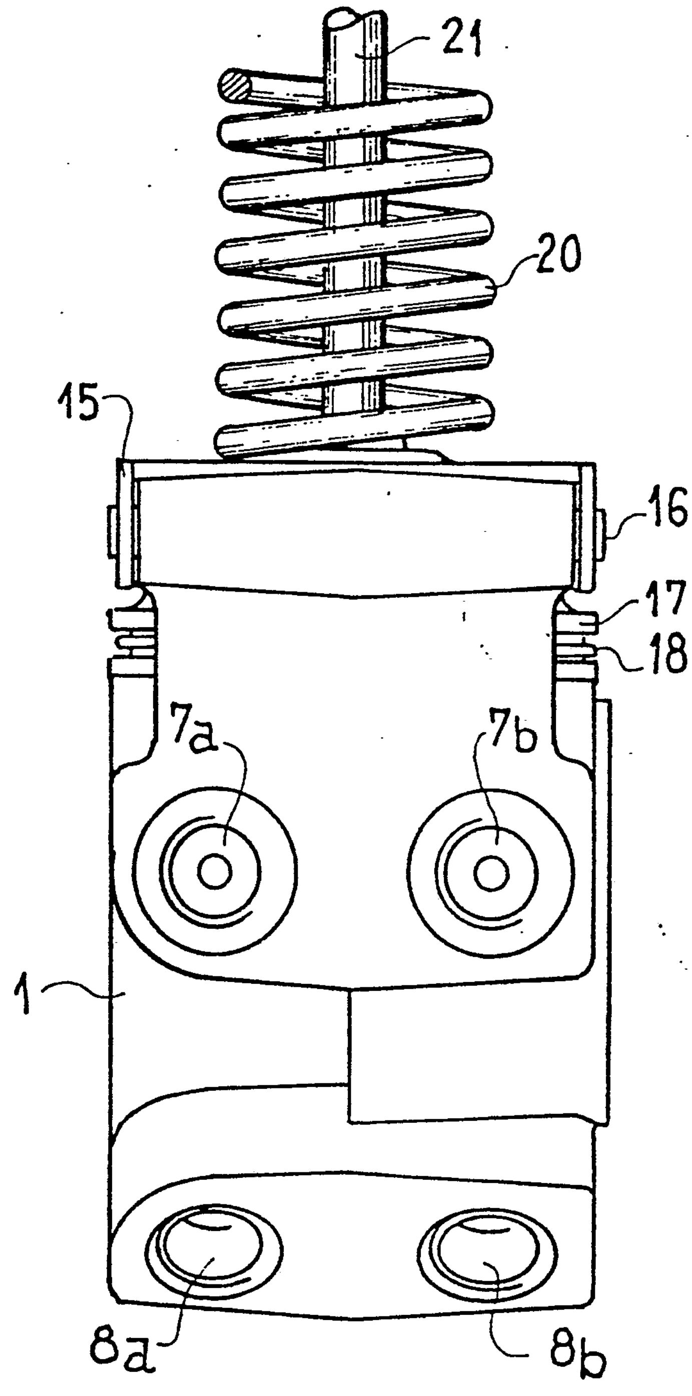

FIG_3